# EUROPÄISCHE PATENTSCHRIFT

(11) **EP 1 221 844 B1**
(45) Veröffentlichungstag und Bekanntmachung des Hinweises auf die Patenterteilung: **18.08.2004**
(21) Anmeldenummer: 00967764.2
(22) Anmeldetag: 25.09.2000
(51) Int. Cl.: A01N 43/00

(54) **SELEKTIVE HERBIZIDE AUF BASIS VON PYRIMIDIN-DERIVATEN**
SELECTIVE HERBICIDES BASED ON PYRIMIDINE-DERIVATIVES
HERBICIDES SELECTIFS A BASE DE DERIVES DE PYRIMIDINE

(30) Priorität: 06.10.1999 DE 19947918
(43) Veröffentlichungstag der Anmeldung: 17.07.2002
(73) Patentinhaber: Bayer CropScience AG, 40789 Monheim (DE)
(72) Erfinder: KREMER, Mathias, 51399 Burscheid (DE); FEUCHT, Dieter, 40789 Monheim (DE); FÜRSCH, Helmut, 42799 Leichlingen (DE); WELLMANN, Arndt, 51519 Odenthal (DE)
(86) Internationale Anmeldenummer: PCT/EP2000/009322
(87) Internationale Veröffentlichungsnummer: WO 2001/024633

(56) Entgegenhaltungen:
- WO-A-94/02014
- DE-A- 19 546 751
- DE-A- 19 720 367
- DE-A- 19 728 568
- GB-A- 2 334 887
- CHEMICAL PATENTS INDEX, DOCUMENTATION ABSTRACTS JOURNAL Section Ch, Week 199126, 28. August 1991 (1991-08-28) Derwent Publications Ltd., London, GB; Class A97, AN 1991-188841 XP002160182 & JP 03 115205 A (KUMIAI CHEM IND CO LTD), 16. Mai 1991 (1991-05-16)
- KOO S J ET AL: "BIOLOGICAL ACTIVITY OF THE NEW HERBICIDE LGC-40863 {BENZOPHENONE O-U2,6-BISU4,6-DIMETHOXY-2-PYRIMIDINYL)OXY BENZOYLOXIME}" PESTICIDE SCIENCE,GB,ELSEVIER APPLIED SCIENCE PUBLISHER. BARKING, Bd. 51, Nr. 2, 1. Oktober 1997 (1997-10-01), Seiten 109-114, XP000732177 ISSN: 0031-613X
- DEEGE, R ET AL: "BAY FOE 5043: A new low rate herbicide for preemergence grass control in corn, cereals, soybeans and other selected crops" BRIGHTON CROP PROT. CONF.--WEEDS (1995), (VOL. 1), 43-8, 1995, XP000986626
- "NEUE SELEKTIV-HERBIZIDE MITTEL" RESEARCH DISCLOSURE,GB,INDUSTRIAL OPPORTUNITIES LTD. HAVANT, Nr. 357, 1994, Seiten 33-45, XP000425358 ISSN: 0374-4353

## Beschreibung

Die Erfindung betrifft neue herbizide, synergistische Wirkstoffkombinationen, die aus bekannten Pyrimidin-Derivaten einerseits und bekannten, herbizid wirksamen Verbindungen und/oder Safenern andererseits bestehen und mit besonders gutem Erfolg zur selektiven Unkrautbekämpfung in verschiedenen Nutzpflanzenkulturen verwendet werden können.

Pyrimidin-Derivate sind als breit wirksame Herbizide Gegenstand einer Reihe von Patentanmeldungen (vgl. US 4 906 285, EP-A-321 846, EP-A 658 549, US 4 248 619, US 4 427 437). Die bekannten Pyrimidin-Derivate weisen jedoch eine Reihe von Wirkungslücken auf. Die Verträglichkeit dieser Verbindungen gegenüber Kulturpflanzen ist ebenfalls nicht unter allen Bedingungen ganz zufriedenstellend. In Koos et al. (1997): "Biological activity of the new herbicide LGC-44863", Pesticide Science, Elsevier Applied Science Publisher, Barking, Bd. 51, Nr. 2, Seiten 109-114, wird bereits die gemeinsame Anwendung des Phenoxypyrimidin-Derivats LGC-40863 mit Pendimethalin genannt.

Überraschenderweise wurde nun gefunden, dass eine Reihe von bekannten Wirkstoffen aus der Reihe der Phenoxypyrimidin-Derivate bei gemeinsamer Anwendung mit bekannten herbizid wirksamen Verbindungen aus verschiedenen Stoffklassen ausgesprochen synergistische Effekte hinsichtlich der Wirkung gegen Unkräuter zeigen und besonders vorteilhaft als breit wirksame Kombinationspräparate zur selektiven Bekämpfung von Unkräutern in Nutzpflanzenkulturen wie Getreide, z.B. Weizen, Gerste, Roggen und Reis, verwendet werden können.

Überraschenderweise wurde ebenfalls gefunden, dass die Phenoxypyrimidin-Derivate alleine oder zusammen mit bekannten herbizid wirksamen Verbindungen bei gemeinsamer Anwendung mit den im weiteren beschriebenen, die Kulturpflanzenverträglichkeit verbessernden Verbindungen (Safenern/Antidots) ausgesprochen gut die Schädigung der Kulturpflanzen verhindern und besonders vorteilhaft als breit wirksame Kombinationspräparate zur selektiven Bekämpfung von Unkräutern in Nutzpflanzenkulturen wie Getreide, so z.B. Weizen, Gerste, Roggen und Reis, verwendet werden können.

Gegenstand der Erfindung sind selektiv-herbizide Mittel, gekennzeichnet durch einen wirksamen Gehalt an einer Wirkstoffkombination umfassend
(a) zumindest ein Phenoxypyrimidin-Derivat der allgemeinen Formel (I) 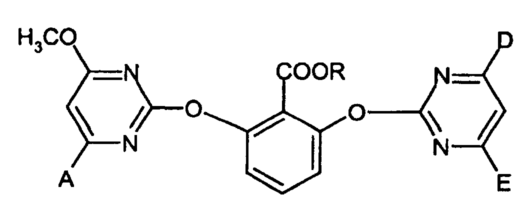 in welcher
   - R: für Wasserstoff oder 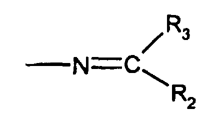 steht,
   wobei
   - R₂: für Phenyl steht,
   - R₃: für Phenyl steht,
   - A: für Methoxy steht, und
   - D und E: jeweils für Methoxy stehen,
   und/oder ein Salz einer Verbindung der Formel (I)
   (_{"}Wirkstoffe der Gruppe 1 "),
   und
(b) einer oder mehrerer Verbindungen aus einer zweiten Gruppe von Herbiziden, welche die nachstehend genannten Wirkstoffe enthält:
   (5-Trifluormethyl-1,3,4-thiadiazol-2-yl-oxy)-essigsäure-N-isopropyl-N-(4-fluorphenyl)-amid, 2-(2-Methoxycarbonyl-phenylsulfonylaminocarbonyl)-4-methyl-5-npropoxy-2,4-dihydro-3H-1,2,4-triazol-3-on oder ein Natriumsalz dieser Verbindung, Methyl-2-[[[[(4,6-dimethoxy-2-pyrimidinyl)amino]carbonyl]amino]sulfonyl]-6-(trifluoromethyl)-3-pyridincarboxylat(-Mononatriumsalz),
   Ethyl-2-[4-(6-chlor-benzoxazol-2-yl-oxy)-phenoxy]-propanoat
   (_{"}Wirkstoffe der Gruppe 2"),
   sowie gegebenenfalls
(c) zumindest eine die Kulturpflanzen-Verträglichkeit verbessernde Verbindung aus der folgenden Grupe von Verbindungen:
   α-(1,3-Dioxolan-2-yl-methoximino)-phenylacetonitril (Oxabetrinil), α-(Cyanomethoximino)-phenylacetonitril (Cyometrinil), 4-Chlor-N-(1,3-dioxolan-2-yl-methoxy)-α-trifluor-acetophenonoxim (Fluxofenim), 4,6-Dichlor-2-phenylpyrimidin (Fenclorim), 4-Dichloracetyl-3,4-dihydro-3-methyl-2H-1,4-benzoxazin (Benoxacor), 5-Chlor-chinoxalin-8-oxy-essigsäure-(1-methyl-hexylester) (Cloquintocet), 2,2-Dichlor-N-(2-oxo-2-(2-propenylamino)-ethyl)-N-(2-propenyl)-acetamid (DKA-24), 1,8-Naphthalsäureanhydrid, 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbansäure-phenylmethylester (Flurazole), 3-Dichloracetyl-5-(2-furanyl)-2,2-dimethyl-oxazolidin (Furilazole, MON-13900), 4-Dichloracetyl-1-oxa-4-aza-spiro[4.5]-decan (AD-67), 2-Dichlormethyl-2-methyl-1,3-dioxolan (MG-191), 2,2-Dichlor-N-(1,3-dioxolan-2-yl-methyl)-N-(2-propenyl)-acetamid (PPG-1292), 2,2-Dichlor-N,N-di-2-propenyl-acetamid (Dichlormid), N-(4-Methyl-phenyl)-N'-(1-methyl-1-phenyl-ethyl)-harnstoff (Dymron), 1-Dichloracetyl-hexahydro-3,3,8a-trimethylpyrrolo[1,2-a]-pyrimidin-6(2H)-on (BAS-145138), N-(2-Methoxy-benzoyl)-4-(methylaminocarbonylamino)-benzolsulfonamid, Ethyl-4,5-dihydro-5,5-diphenyl-3-isoxazolcarboxylat (Isoxadifen-ethyl), (4-Chlor-2-methylphenoxy)-essigsäure (MCPA), 2-(4-Chlor-2-methylphenoxy)-propionsäure (Mecoprop), Diethyl-1-(2,4-dichlorophenyl)-4,5-dihydro-5-methyl-1H-pyrazol-3,5-dicarboxylat (Mefenpyr-diethyl) und 2,4-Dichlorophenoxyessigsäure (2,4-D) und dessen Derivate ("Wirkstoffe der Gruppe 3").

Als Mischungskomponenten aus den Wirkstoffen der Gruppe 3 werden besonders hervorgehoben:

5-Chlor-chinoxalin-8-oxy-essigsäure-(1-methylhexylester) (Cloquintocet), 1-(2,4-Dichlor-phenyl)-5-trichlormethyl-1H-1,2,4-triazol-3-carbonsäure-ethylester (Fenchlorazol-ethyl), Ethyl-4,5-dihydro-5,5-diphenyl-3-isoxazolcarboxylat (Isoxadifen-ethyl}, (4-Chlor-2-methylphenoxy)-essigsäure (MCPA), 2-(4-Chlor-2-methylphenoxy)-propionsäure (Mecoprop), Diethyl-1-(2,4-dichlorophenyl)-4,5-dihydro-5-methyl-1Hpyrazol-3,5-dicarboxylat (Mefenpyr-diethyl) und 2,4-Dichlorophenoxyessigsäure (2,4-D) und dessen Derivate.

Erfindungsgemäß ganz besonders bevorzugt sind selektiv-herbizide Mittel, die gekennzeichnet sind durch einen Gehalt an einer Wirkstoflkombination umfassend (5-Trifluormethyl-1,3,4-thiadiazol-2-yl-oxy)-essigsäure-N-isopropyl-N-(4-fluorphenyl)-amid der Formel 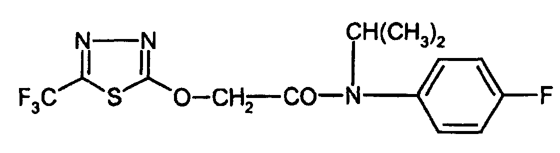 und 2-(2-Methoxycarbonyl-phenylsulfonylaminocarbonyl)-4-methyl-5-n-propoxy-2,4-dihydro-3H-1,2,4-triazol-3-on oder ein Natriumsalz dieser Verbindung der Formel 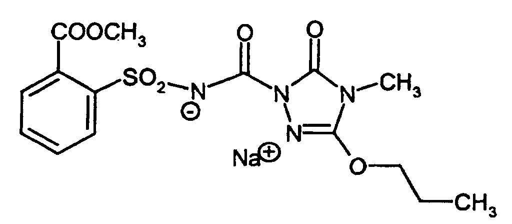 besonders bevorzugt sind,
sowie gegebenenfalls
c) zumindest eine der vorstehend genannten, die Kulturpflanzen-Verträglichkeit verbessernden Verbindung der Gruppe 3, wobei solche Verbindungen bevorzugt sind, die vorstehend in bevorzugten Bereichen genannt wurden.

Erfindungsgemäß am meisten bevorzugt sind selektiv-herbizide Mittel, die gekennzeichnet sind durch einen Gehalt an einer Wirkstoffkombination umfassend
2,6-Bis[(4,6-dimethoxy-2-pyrimidinyl)oxy]-benzoat (Natrium), (Bispyribac-sodium) der Formel 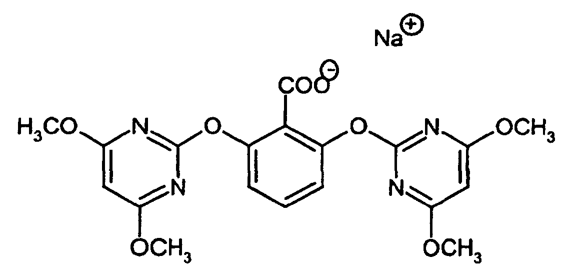 und
b) eine oder mehrere Verbindungen aus einer zweiten Gruppe von Herbiziden, welche die vorstehend unter b) genannten Wirkstoffe enthält, wobei die Wirkstoffe
   (5-Trifluormethyl-1,3,4-thiadiazol-2-yl-oxy)-essigsäure-N-isopropyl-N-(4-fluorphenyl)-amid der Formel 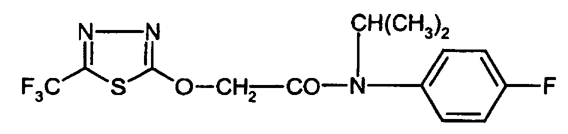 und
   2-(2-Methoxycarbonyl-phenylsulfonylaminocarbonyl)-4-methyl-5-n-propoxy-2,4-dihydro-3H-1,2,4-triazol-3-on oder ein Natriumsalz dieser Verbindung der Formel 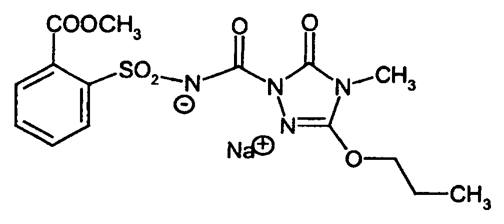 besonders bevorzugt sind,
   sowie gegebenenfalls
c) zumindest eine der vorstehend genannten, die Kulturpflanzen-Verträglichkeit verbessernden Verbindung der Gruppe 3, wobei solche Verbindungen bevorzugt sind, die vorstehend in bevorzugten Bereichen genannt wurden.

Es wurde nun überraschend gefunden, dass die oben definierten Wirkstoffkombinationen aus den Phenoxypyrimidin-Derivaten der Formel (I) und den oben angeführten Wirkstoffen der Gruppe 2 in Kombination mit Wirkstoffen der Gruppe 3, bei sehr guter Nutzpflanzen-Verträglichkeit eine besonders hohe herbizide Wirksamkeit aufweisen und in verschiedenen Kulturen, insbesondere in Reis und Weizen, daneben aber auch in Mais und Gerste zur selektiven Unkrautbekämpfung verwendet werden können.

Überraschenderweise ist die herbizide Wirksamkeit der erfindungsgemäßen Wirkstoffkombinationen aus Verbindungen der oben aufgeführten Gruppen 1 und 2 erheblich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter gut bekämpfen. Die neuen Wirkstoffkombinationen stellen somit eine wertvolle Bereicherung der Selektivherbizide dar.

Es wurde außerdem überraschend gefunden, dass die oben definierten Wirkstoffkombinationen aus Phenoxypyrimidin-Derivaten der Formel (I) bzw. deren Salze und einem Safener/Antidot ("Wirkstoffe der Gruppe 3") in Kombination mit einem oder mehreren der oben angeführten Wirkstoffe der Gruppe 2 bei sehr guter Nutzpflanzen-Verträglichkeit eine besonders hohe herbizide Wirksamkeit aufweisen und in verschiedenen Kulturen, insbesondere in Getreide, vor allem Weizen, aber auch in Soja, Kartoffeln, Mais und Reis zur selektiven Unkrautbekämpfung verwendet werden können.

Überraschenderweise wurde zudem gefungen, dass auch die herbizidwirksame Substanz MCPA sowie die Substanz 2,4-Dichlorophenoxy-essigsäure (2,4-D) und ihre Derivate die oben beschriebene Safeneraufgabe übernehmen können.

Eine bevorzugte Ausführungsform ist daher auch eine Mischung enthaltend eine Verbindung der Formel (I) und/oder deren Salze einerseits und 2,4-D und/oder dessen Derivate andererseits, gegebenenfalls in Kombination mit einem oder mehreren der oben angeführten Wirkstoffe der Gruppe 2. Typische Derivate von 2,4-D sind z.B. deren Ester.

Eine bevorzugte Ausführungsform ist weiterhin eine Mischung enthaltend eine Verbindung der Formel (I) und/oder deren Salze einerseits und MCPA andererseits, gegebenenfalls in Kombination mit einem oder mehreren der oben angeführten Wirkstoffe der Gruppe 2.

Die Verbindungen Diethyl-1-(2,4-dichlorophenyl)-4,5-dihydro-5-methyl-1H-pyrazole-3,5-dicarboxylate (Mefenpyr-diethyl), (1-methylhexyl)-[(5-chloro-8-quinolinyl)oxy]-acetate (Cloquintocet-mexyl) und Ethyl-1-(2,4-dichlorophenyl)-5-(trichloromethyl)-1H-1,2,4-triazole-3-carboxylate (Fenchlorazole-ethyl) sind in den folgenden Patentanmeldungen beschrieben: DE-A-39 39 503, EP- A-191 736 bzw. DE-A-35 25 205. 2,4-D ist ein bekanntes Herbizid. (4-Chloro-2-methylphenoxy)-essigsäure (MCPA) ist ebenfalls ein bekanntes Herbizid.

Als überraschend ist weiterhin anzusehen, dass aus einer Vielzahl von bekannten Safenem oder Antidots, die befähigt sind, die schädigende Wirkung eines Herbizids auf die Kulturpflanzen zu antagonisieren, gerade die oben aufgeführten Verbindungen der Gruppe (c) geeignet sind, die schädigende Wirkung von Verbindungen der Formel (I) und deren Salzen, gegebenenfalls auch in Kombination mit einem oder mehreren der oben angeführten Wirkstoffe der Gruppe 2, auf die Kulturpflanzen annähernd vollständig aufzuheben, ohne dabei die herbizide Wirksamkeit gegenüber den Unkräutern zu beeinträchtigen.

Hervorgehoben sei hierbei die besonders vorteilhafte Wirkung der besonders bevorzugten Kombinationspartner aus der Gruppe (c), insbesondere hinsichtlich der Schonung von Getreidepflanzen, wie z.B. Reis, Weizen, Gerste und Roggen, als Kulturpflanzen.

Die erfindungsgemäßen Wirkstoffkombinationen können z.B. bei den folgenden Pflanzen verwendet werden:
Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.
Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita.
Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, AJopecurus, Apera, Phalaris.
Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,01 bis 1000 Gewichtsteile, vorzugsweise 0,05 bis 500 Gewichtsteile und besonders bevorzugt 0,1 bis 100 Gewichtsteile Wirkstoff der Gruppe 2.

Der vorteilhafte Effekt der Kulturpflanzenverträglichkeit der erfindungsgemäßen Wirkstoffkombinationen ist bei bestimmten Konzentrationsverhältnissen ebenfalls besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I), seinen Salzen oder dessen Mischungen mit Wirkstoffen der Gruppe 2 0,001 bis 1000 Gewichtsteile, vorzugsweise 0,01 bis 100 Gewichtsteile und besonders bevorzugt 0,1 bis 10 Gewichtsteile einer der oben unter (c) genannten, die Kulturpflanzen Verträglichkeit verbessernden Verbindungen (Antidots/Safener).

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoffimprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgierund/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen einschließlich der safenden Wirkstoffe, vorzugsweise zwischen 0,5 und 90%.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Oleo DuPont 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R: "Calculating synergistic and antagonistic responses ofherbicide combinations", Weeds 15, Seiten 20 - 22, 1967):

| | | |
|---|---|---|
| Wenn | X = | % Schädigung durch Herbizid A (Wirkstoff der Formel I) bei p kg/ha Aufwandmenge |
| | | |
| und | Y = | % Schädigung durch Herbizid B (Wirkstoff der Formel In bei q kg/ha Aufwandmenge |
| | | |
| und | E = | die erwartete Schädigung der Herbizide A und B bei p und q kg/ha Aufwandmenge, |
| | | |
| dann ist | E = | X + Y - (X * Y/100). |

Ist die tatsächliche Schädigung größer als berechnet, so ist die Kombination in ihrer Wirkung überadditiv, das heißt, sie zeigt einen synergistischen Effekt.

### Beispiele

### Beispiel 1

### MKH 6561 und Bispyribac-sodium (Weizen / Nachauflauf Frühjahr)

Zur Untersuchung eines möglichen Synergismus wurden die Verbindungen MKH 6561 und Bispyribac-Sodium (KIH 2023) unter Freilandbedingungen in einem Winterweizen-Hauptanbaugebiet Großbritanniens gegen das wirtschaftlich bedeutende Ungras *Alopecurus myosuroides* Huds. geprüft. Die Anlage des Kleinparzellenversuchs erfolgte auf Anbauflächen der landwirtschaftlichen Praxis. Es wurde eine Fläche mit besonders hohem Unkrautbesatz ausgewählt.

Die Applikation der Wirkstoffe erfolgte im Nachauflauf Frühjahr flächig im Spritzverfahren mit mittlerer Tropfengröße. Zur Herstellung einer zweckmäßigen Wirkstoffzubereitung wurden die Wirkstoffe als 70 WG (70 % w/w wasserdispergierbares Pulver) bzw. 400 SC ( 400 g/L Suspensionskonzentrat) formuliert und in Wasser suspendiert. Anschließen wurde die Spritzbrühe in der praxisüblichen Wasseraufwandmenge von 200 L/ha ausgebracht.

Zur Beurteilung der Kulturverträglichkeit wurden nach der Behandlung Pflanzenwuchshemmungen oder Aufhellungen der Blattfläche in % Schädigung bezogen auf die Entwicklung der unbehandelten Kontrolle bonitiert. Die herbizide Wirksamkeit wurde zum Zeitpunkt der Blüte auf Basis der Anzahl Ähren als % Reduktion im Vergleich zur unbehandelten Kontrolle erfaßt. Es bedeuten:
0 % = keine Schädigung der Kultur bzw. keine herbizide Wirkung,
100 % = totale Vernichtung der Kultur bzw. der Unkräuter.

MKH 6561 und KIH 2023 zeigten in diesem Versuch einen deutlich ausgeprägten Synergismus in der Wirkung gegen *Alopecurus myosuroides* (Tabelle 1). Die Wirkung lag deutlich über dem nach der Colby-Formel für die Mischung zu erwartenden Wert. Schäden an der Kultur traten nicht auf.

**Tabelle 1**

| Art | Aktivität (%) | | | |
|---|---|---|---|---|
| | MKH 6561 (42 g a.i./ha) | KIH 2023 (50 g a.i./ha) | MKH6561 +KIH 2023 (42+50 g a.i./ha) | Wert nach Colby (1967) |
| *Alopecurus myosuroides* | 50,5 | 59,3 | 95,2 | 79,9 |
| Kulturschädigung | 0 | 0 | 0 | 0 |

### Beispiel 2

### MCPA und Bispyribac-sodium (Reis, Nachauflauf)

Zur Untersuchung einer möglichen Safener-Wirkung wurde die Verbindung MCPA zusammen mit Bispyribac-sodium in Reis gegen Echinochloa spp. (*E. crus-galli, E. erecta*) geprüft.

Die Applikation der Wirkstoffe erfolgte im Nachauflauf Frühjahr. Die unerwünschten Pflanzen befanden sich in einem Entwicklungsstadium von 13 bis 15 oder 21 bis 23 gemäß BBCH-Skala zur einheitlichen Kodierung der phänologischen Entwicklungsstadien mono- und dikotyler Pflanzen. Die Reispflanzen befanden sich in einem Entwicklungsstadium von 13 bis 14 oder 21 bis 22 gemäß BBCH-Skala (Feller et al. 1995, Nachrichtenbl. Deut. Pflanzenschutzd. 47, 193-206).

Zur Beurteilung des Safener-Effekts des MCPA wurde die Phytotoxizität des Bispyribac-sodium (KIH 2023) mit und ohne MCPA getestet, sowie der Ertrag in kg/ha, die Anzahl der Ähren pro m² sowie das Gewicht der Reiskörner (Gewicht pro 1000 Körner in g) bestimmt (Tabelle 2).

Ohne MCPA zeigt sich leichte Phytotoxizität. Bei Anwesenheit von MCPA tritt diese nicht ein. Hinsichtlich des Ertrags ergibt sich ein statistisch signifikanter Unterschied (8210 kg/ha ohne, 11010 kg/ha mit MCPA). Unterschiede ergeben sich auch bei der Anzahl der Ähren pro m² und dem Gewicht von 1000 Körnern.

**Tabelle 2**

| Behandlung | Rate (g ai/ha) | Phytotoxicity (%) 15 Tage nach Behandlung | Phytotoxicity (%) 30 Tage nach Behandlung | Ertrag (kg/ha) | Ähren/ m² | Gewicht von 1000 Körnern in g |
|---|---|---|---|---|---|---|
| KIH 2023 + S | 75+0,1 % | 7 | 2 | 8210 | 531 | 30 |
| KIH 2023 + S + MCPA | 75+0,1 % +1000 | 0 | 0 | 11010 | 573 | 30,8 |
| S = Surfactant TREND | | | | | | |

### Beispiel 3

### FOE 5043 und KIH 2023 (Vorauflauf/Nachauflauf)

Zur Untersuchung eines möglichen Synergismus wurden die Verbindungen FOE 5043 und KIH 2023 unter Gewächshausbedingungen gegen verschiedene Unkräuter geprüft.

Die jeweils nötige Menge der aktiven Substanz wird dazu in mehreren Millilitern, im Allgemeinen 2-3 ml des Lösungsmittels (Aceton oder DMF) gelöst, Emulgator zugegeben (1 ml) und das erhaltene Konzentrat mit Wasser auf die gewünschte Konzentration verdünnt.

Mischungen von zwei oder mehr Wirkstoffen werden hergestellt, indem die wie vorstehend hergestellten Konzentrate der jeweiligen Wirkstoffe vermischt, gegebenenfalls weitere Wirkstoffe, Formulierungen oder andere Substanzen zugegeben werden und anschließend mit Wasser auf die gewünschte Konzentration verdünnt werden.

Im Allgemeinen wird eine oberflächenaktive Substanz, z.B. Renex 36 in einer Konzentration von 0.1% (w/v) zu den für die Prüfung im Nachauflauf vorgesehenen Spritzlösungen zugegeben.

Die Menge des Wirkstoffs bzw. seiner Formulierung in den zu testenden Lösungen entspricht den gewünschten Aufwandmengen pro ha.

### Vorauflauf

Samen der Testpflanzen werden in normale Erde gesät. Nach 24 h wird die gewünschte Menge an aktiver Substanz als aktiver Inhaltsstoff oder Formulierung auf die Bodenoberfläche aufgesprüht. Die Konzentration der aktiven Substanz in der Spritzlösung wird so gewählt, dass die gewünschte Aufwandmenge in 5001 Wasser/ha ausgebracht werden kann.

### Nachauflauf

Testpflanzen werden unter kontrollierten Temperatur- und Lichtbedingungen ausgezogen. Das Besprühen mit der Testlösung findet statt, wenn die Pflanzen eine Höhe von 5 bis 15 cm erreicht haben.

Die Konzentration der aktiven Substanz in der Spritzlösung wird so gewählt, dass die gewünschte Aufwandmenge in 5001 Wasser/ha ausgebracht werden kann.

Die Bewertung erfolgte etwa drei Wochen nach der Applikation. Die herbizide Wirksamkeit wird visuell im Vergleich zur unbehandelten Kontrolle beurteilt. Es bedeuten
- 0% =: keine herbizide Wirkung, entspricht der unbehandelten Kontrolle
- 100% =: völlige Vernichtung der Testpflanzen.

FOE 5043 und KIH 2023 zeigten in diesen Versuchen einen deutlich ausgeprägten Synergismus in der Wirkung gegen verschiedene Unkräuter (Tabellen 3-15; die mit (*) gekennzeichneten Werte wurden nach Colby, 1967, berechnet).

**Tabelle 3:**

| **FOE 5043 + KIH 2023 (Vorauflauf)** | | | |
|---|---|---|---|
| | **Aufwandmenge** **g ai/ha** | **Bromus** **secalinus** **beobachtet** | **Bromus** **secalinus** **errechnet*** |
| FOE 5043 | 125 | 20 | |
| KIH 2023 | 8 | 0 | |
| FOE 5043 + KIH 2023 | 125 + 8 | 95 | 20 |

**Tabelle 4:**

| **FOE 5043 + KIH 2023 (Vorauflauf)** | | | |
|---|---|---|---|
| | **Aufwandmenge** **g ai/ha** | **Lolium** **perenne** **beobachtet** | **Lolium** **perenne** **errechnet*** |
| FOE 5043 | 125 | 95 | |
| KIH 2023 | 15 4 | 0 0 | |
| FOE 5043 + KIH 2023 | 30 + 15 | 90 | 10 |
| | 125+4 | 100 | 95 |

**Tabelle 5:**

| **FOE 5043 + KIH 2023 (Vorauflauf)** | | | |
|---|---|---|---|
| | **Aufwandmenge** **g ai/ha** | **Chenopodium** **album** **beobachtet** | **Chenopodium** **album** **errechnet*** |
| FOE 5043 | 125 | 30 | |
| KIH 2023 | 15 | 20 | |
| FOE 5043 + KIH 2023 | 125 + 15 | 100 | 44 |

**Tabelle 6:**

| **FOE 5043 + KIH 2023 (Vorauflauf)** | | | |
|---|---|---|---|
| | **Aufwandmenge** **g ai/ha** | **Avena** **fatua** **beobachtet** | **Avena** **fatua** **errechnet*** |
| FOE 5043 | 125 60 | 90 70 | |
| KIH 2023 | 4 | 0 | |
| FOE 5043 + KIH 2023 | 125 + 4 | 100 | 90 |
| | 60+4 | 100 | 70 |

**Tabelle 7:**

| **FOE 5043 + KIH 2023 (Vorauflauf)** | | | |
|---|---|---|---|
| | **Aufwandmenge** **g ai/ha** | **Polygonum** **convolvulus** **beobachtet** | **Avena** **convolvulus** **errechnet*** |
| FOE 5043 | 125 | 0 | |
| KIH 2023 | 15 | 10 | |
| FOE 5043 + KIH 2023 | 125 + 15 | 90 | 10 |

**Tabelle 8:**

| **FOE 5043 + KIH 2023 (Vorauflauf)** | | | |
|---|---|---|---|
| | **Aufwandmenge** **g ai/ha** | **Veronica** **persica** **beobachtet** | **Veronica** **persica** **errechnet*** |
| FOE 5043 | 125 | 30 | |
| | 60 | 20 | |
| KIH 2023 | 8 | 60 | |
| | 4 | 20 | |
| FOE 5043 + KIH 2023 | 125 + 8 | 100 | 72 |
| | 60 + 4 | 98 | 36 |

**Tabelle 9:**

| **FOE 5043 + KIH 2023 (Nachauflauf)** | | | |
|---|---|---|---|
| | **Aufwandmenge** **g ai/ha** | **Galium** **aparine** **beobachtet** | **Galium** **aparine** **errechnet*** |
| FOE 5043 | 60 | 80 | |
| | 30 | 70 | |
| KIH 2023 | 4 | 0 | |
| FOE 5043 + KIH 2023 | 60 + 4 | 98 | 80 |
| | 30 + 4 | 98 | 70 |

**Tabelle 10:**

| **FOE 5043 + KIH 2023 (Nachauflauf)** | | | |
|---|---|---|---|
| | **Aufwandmenge** **g ai/ha** | **Polygonum** **convolvulus** **beobachtet** | **Polygonum** **convolvulus** **errechnet*** |
| FOE 5043 | 125 | 0 | |
| | 60 | 0 | |
| | 30 | 0 | |
| KIH 2023 | 4 | 0 | |
| FOE 5043 + KIH 2023 | 125 + 4 | 95 | 0 |
| | 60+4 | 98 | 0 |
| | 30 + 4 | 90 | 0 |

**Tabelle 11:**

| **FOE 5043 + KIH 2023 (Nachauflauf)** | | | |
|---|---|---|---|
| | **Aufwandmenge** **g ai/ha** | **Veronica** **persicum** **beobachtet** | **Veronica** **persicum** **errechnet*** |
| FOE 5043 | 125 | 30 | |
| | 60 | 30 | |
| KIH 2023 | 4 | 50 | |
| FOE 5043 + KIH 2023 | 125 + 4 | 95 | 65 |
| | 60 + 4 | 90 | 65 |

**Tabelle 12:**

| **FOE 5043 + KIH 2023 (Nachauflauf)** | | | |
|---|---|---|---|
| | **Aufwandmenge** **g ai/ha** | **Viola** **arvensis** **beobachtet** | **Viola** **arvensis** **errechnet*** |
| FOE 5043 | 60 | 0 | |
| | 30 | 0 | |
| KIH 2023 | 4 | 70 | |
| FOE 5043 + KIH 2023 | 60 + 4 | 95 | 70 |
| | 30 + 4 | 95 | 70 |

**Tabelle 13:**

| **FOE 5043 + KIH 2023 (Nachauflauf)** | | | |
|---|---|---|---|
| | **Aufwandmenge** **g ai/ha** | **Solanum** **nigrum** **beobachtet** | **Solanum** **nigrum** **errechnet*** |
| FOE 5043 | 60 | 0 | |
| KIH 2023 | 4 | 90 | |
| FOE 5043 + KIH 2023 | 60 + 4 | 100 | 90 |

### Beispiel 4

### Flupyrsulfuron und KIH 2023 (Vorauflauf/Nachauflauf)

Zur Untersuchung eines möglichen Synergismus wurden die Verbindungen Flupyrsulfuron und KIH 2023 unter Gewächshausbedingungen gegen verschiedene Unkräuter geprüft.

Die Applikation erfolgte dabei für Vor- und Nachauflauf wie in Beispiel 3 beschrieben.

Die Bewertung erfolgte ebenfalls wie in Beispiel 3 beschrieben.

Es bedeuten wieder
- 0% =: keine herbizide Wirkung, entspricht der unbehandelten Kontrolle
- 100% =: völlige Vernichtung der Testpflanzen

Flupyrsulfuron und KIH 2023 zeigten in diesen Versuchen einen deutlich ausgeprägten Synergismus in der Wirkung gegen verschiedene Unkräuter (Tabellen 16-27; die mit (*) gekennzeichneten Werte wurden nach Colby, 1967, berechnet).

**Tabelle 14:**

| **Flupyrsulfuron + KIH 2023 (Vorauflauf)** | | | |
|---|---|---|---|
| | **Aufwandmenge** **g ai/ha** | **Brassica** **beobachtet** | **Brassica** **errechnet*** |
| Flupyrsulfuron | 8 | 20 | |
| | 4 | 20 | |
| KIH 2023 | 15 | 0 | |
| | 4 | 0 | |
| Flupyrsulfuron + KIH 2023 | 8 + 15 | 95 | 20 |
| | 4 + 15 | 60 | 20 |
| | 8 + 4 | 90 | 20 |
| | 4+4 | 60 | 20 |

**Tabelle 15:**

| **Flupyrsulfuron + KIH 2023 (Vorauflauf)** | | | |
|---|---|---|---|
| | **Aufwandmenge** **g ai/ha** | **Ipomoea** **hederacea** **beobachtet** | **Ipomoea** **hederacea** **errechnet*** |
| Flupyrsulfuron | 2 | 30 | |
| KIH 2023 | 4 | 0 | |
| Flupyrsulfuron + KIH 2023 | 2 + 4 | 70 | 30 |

**Tabelle 16:**

| **Flupyrsulfuron + KIH 2023 (Vorauflauf)** | | | |
|---|---|---|---|
| | **Aufwandmenge** **g ai/ha** | **Setaria** **viridis** **beobachtet** | **Setaria** **viridis** **errechnet*** |
| Flupyrsulfuron | 8 | 20 | |
| | 4 | 20 | |
| | 2 | 0 | |
| KIH 2023 | 15 | 0 | |
| | 4 | 0 | |
| Flupyrsulfuron + KIH 2023 | 8 + 15 | 90 | 20 |
| | 4 + 15 | 50 | 20 |
| | 2 + 4 | 70 | 0 |

**Tabelle 17:**

| **Flupyrsulfuron + KIH 2023 (Nachauflauf)** | | | |
|---|---|---|---|
| | **Aufwandmenge** **g ai/ha** | **Alopecurus** **myosuroides** **beobachtet** | **Alopecurus** **myosuroides** **errechnet*** |
| Flupyrsulfuron | 8 | 80 | |
| | 4 | 80 | |
| | 2 | 50 | |
| KIH 2023 | 15 | 0 | |
| | 8 | 0 | |
| Flupyrsulfuron + KIH 2023 | 8+15 | 98 | 80 |
| | 4+15 | 95 | 80 |
| | 2+15 | 90 | 50 |
| | 8 + 8 | 98 | 80 |
| | 4 + 8 | 90 | 80 |

**Tabelle 18:**

| **Flupyrsulfuron + KIH 2023 (Nachauflauf)** | | | |
|---|---|---|---|
| | **Aufwandmenge** **g ai/ha** | **Bromus** **secalinus** **beobachtet** | **Bromus** **secalinus** **errechnet*** |
| Flupyrsulfuron | 8 | 0 | |
| KIH 2023 | 15 | 80 | |
| Flupyrsulfuron + KIH 2023 | 8 + 15 | 100 | 80 |

**Tabelle 19:**

| **Flupyrsulfuron + KIH 2023 (Nachauflauf)** | | | |
|---|---|---|---|
| | **Aufwandmenge** **g ai/ha** | **Abutilon** **theophrasti** **beobachtet** | **Abutilon** **theoprasti** **errechnet*** |
| Flupyrsulfuron | 8 | 60 | |
| KIH 2023 | 4 | 0 | |
| Flupyrsulfuron + KIH 2023 | 8 + 4 | 95 | 60 |

**Tabelle 20:**

| **Flupyrsulfuron + KIH 2023 (Nachauflauf)** | | | |
|---|---|---|---|
| | **Aufwandmenge** **g ai/ha** | **Chenopodium** **album** **beobachtet** | **Chenopodium** **album** **errechnet*** |
| Flupyrsulfuron | 2 | 40 | |
| KIH 2023 | 4 | 0 | |
| Flupyrsulfuron + KIH 2023 | 2 + 4 | 80 | 40 |

**Tabell 21:**

| **Flupyrsulfuron + KIH 2023 (Nachauflauf)** | | | |
|---|---|---|---|
| | **Aufwandmenge** **g ai/ha** | **Matricaria** **inodora** **beobachtet** | **Matricaria** **inodora** **errechnet*** |
| Flupyrsulfuron | 4 | 90 | |
| | 2 | 50 | |
| KIH 2023 | 4 | 0 | |
| Flupyrsulfuron + KIH 2023 | 4 + 4 | 100 | 90 |
| | 2 + 4 | 98 | 50 |

**Tabelle 22:**

| **Flupyrsulfuron + KIH 2023 (Nachauflauf)** | | | |
|---|---|---|---|
| | **Aufwandmenge** **g ai/ha** | **Polygonum** **convolvulus** **beobachtet** | **Polygonum** **convolvulus** **errechnet*** |
| Flupyrsulfuron | 8 | 80 | |
| | 4 | 80 | |
| | 2 | 70 | |
| KIH 2023 | 4 | 0 | |
| Flupyrsulfuron + KIH 2023 | 8 + 4 | 100 | 80 |
| | 4+4 | 100 | 80 |
| | 2 + 4 | 90 | 70 |

**Tabelle 23:**

| **Flupyrsulfuron + KIH 2023 (Nachauflauf)** | | | |
|---|---|---|---|
| | **Aufwandmenge** **g ai/ha** | **Solanum** **nigrum** **beobachtet** | **Solanum** **nigrum** **errechnet*** |
| Flupyrsulfuron | 8 | 0 | |
| KIH 2023 | 4 | 90 | |
| Flupyrsulfuron + KIH 2023 | 8 + 4 | 100 | 90 |

**Tabelle 24:**

| **Flupyrsulfuron + KIH 2023 (Nachauflauf)** | | | |
|---|---|---|---|
| | **Aufwandmenge** **g ai/ha** | **Veronica** **persicum** **beobachtet** | **Veronica** **persicum** **errechnet*** |
| Flupyrsulfuron | 8 | 0 | |
| KIH 2023 | 4 | 50 | |
| Flupyrsulfuron + KIH 2023 | 8 + 4 | 90 | 50 |

**Tabelle 25:**

| **Flupyrsulfuron + KIH 2023 (Nachauflauf)** | | | |
|---|---|---|---|
| | **Aufwandmenge** **g ai/ha** | **Viola** **arvensis** **beobachtet** | **Viola** **arvensis** **errechnet*** |
| Flupyrsulfuron | 8 | 30 | |
| | 4 | 0 | |
| | 2 | 0 | |
| KIH 2023 | 8 | 90 | |
| | 4 | 70 | |
| Flupyrsulfuron + KIH 2023 | 4+8 8 | 100 | 90 |
| | 2+8 | 100 | 90 |
| | 8 + 4 | 100 | 79 |
| | 4+4 | 100 | 70 |

### Beispiel 5

### Cloquintocet und KIH 2023(Gerste/Weizen, Nachauflauf)

Zur Untersuchung der Safener-Wirkung von Cloquintocet wurde diese Verbindung zusammen mit KIH 2023 in Gerste und Weizen geprüft.

Zur Beurteilung des Safener-Effekts des Cloquintocets wurde die Phytotoxizität des KIH 2023 mit und ohne MCPA getestet (siehe Tab. 28 und 29).

Die Beurteilung selbst erfolgte gemäß Beispiel 1, d.h. die Kulturverträglichkeit wurde in % Schädigung bezogen auf die Entwicklung der unbehandelten Kontrolle bonitiert. Es bedeuten wiederum:
- 0% =: keine Schädigung der Kultur bzw. keine herbizide Wirkung
- 100% =: totale Vernichtung der Kultur.

Cloquintocet zeigte in den Versuchen eine deutliche Safener-Wirkung.

**Tabelle 26:**

| **Cloquintocet und KIH 2023 (Nachauflauf)** | | |
|---|---|---|
| **Wirkstoff** | **Aufwandmenge** **in g/ha** | **Schädigung** **Gerste [%]** |
| KIH 2023 | 60 | 50 |
| KIH 2023 | 30 | 35 |
| KIH 2023 | 15 | 20 |
| KIH 2023 + Cloquintocet | 60 + 60 | 20 |
| KIH 2023 + Cloquintocet | 30+30 | 10 |
| KIH 2023 + Cloquintocet | 15 + 15 | 5 |

**Tabelle 27:**

| **Cloquintocet und KIH 2023 (Nachauflauf)** | | |
|---|---|---|
| **Wirkstoff** | **Aufwandmenge** **in g/ha** | **Schädigung** **Weizen [%]** |
| KIH 2023 | 250 | 45 |
| KIH 2023 | 125 | 20 |
| KIH 2023 | 60 | 10 |
| KIH 2023 + Cloquintocet | 250 + 250 | 20 |
| KIH 2023 + Cloquintocet | 125 + 125 | 10 |
| KIH 2023 + Cloquintocet | 60 + 60 | 5 |
| KIH 2023 + Cloquintocet | 250 + 30 | 20 |
| KIH 2023 + Cloquintocet | 125 + 30 | 15 |
| KIH 2023 + Cloquintocet | 60 + 30 | 5 |

### Beispiel 6

### Mefenpyr und KIH 2023 (Gerste/Weizen, Nachauflauf)

Zur Untersuchung der Safener-Wirkung von Mefenpyr wurde diese Verbindung zusammen mit KIH 2023 in Gerste und Weizen geprüft.

Die Beurteilung des Safener-Effekts des Mefenpyrs erfolgte analog zu Beispiel 5 (siehe Tabelle 30 und 31).

Zusätzlich wurde die Verträglichkeit von Mefenpyr alleine in Getreide (Nachauflauf) getestet (siehe Tabellen 31-35).

Mefenpyr zeigte in den Versuchen eine deutlich ausgeprägte Safener-Wirkung.

**Tabelle 28:**

| **Mefenpyr und KIH 2023 (Nachauflauf)** | | |
|---|---|---|
| **Wirkstoff** | **Aufwandmenge** **in g/ha** | **Schädigung** **Gerste [%]** |
| KIH 2023 | 60 | 50 |
| KIH 2023 | 30 | 35 |
| KIH 2023 | 15 | 20 |
| KIH 2023 + Mefenpyr | 60 + 60 | 20 |
| KIH 2023 + Mefenpyr | 30 +30 | 5 |
| KIH 2023 + Mefenpyr | 15 + 15 | 5 |
| KIH 2023 + Mefenpyr | 60 + 30 | 20 |
| KIH 2023 + Mefenpyr | 30 + 30 | 15 |
| KIH 2023 + Mefenpyr | 15 + 30 | 5 |

**Tabelle 29:**

| **Mefenpyr und KIH 2023 (Nachauflauf)** | | |
|---|---|---|
| **Wirkstoff** | **Aufwandmenge** **in g/ha** | **Schädigung** **Weizen [%]** |
| KIH 2023 | 250 | 45 |
| KIH 2023 | 125 | 20 |
| KIH 2023 | 60 | 10 |
| KIH 2023 + Mefenpyr | 250 + 250 | 10 |
| KIH 2023 + Mefenpyr | 125 + 125 | 5 |
| KIH 2023 + Mefenpyr | 60 + 60 | 5 |
| KIH 2023 + Mefenpyr | 250 + 30 | 25 |
| KIH 2023 + Mefenpyr | 125 + 30 | 10 |
| KIH 2023 + Mefenpyr | 60 + 30 | 5 |

**Tabelle 30:**

| **Verträglichkeit von Mefenpyr in Getreide (Nachauflauf)** | |
|---|---|
| **Aufwandmenge in g/ha** | **Weizen (14 Tage) [%]** |
| 1000 | 0 |
| 500 | 0 |
| 100 | 0 |

**Tabelle 31:**

| **Verträglichkeit von Mefenpyr in Getreide (Nachauflauf)** | | |
|---|---|---|
| **Aufwandmenge** **in g/ha** | **Schädigung** **Weizen (15 Tage)** **[%]** | **Schädigung** **Gerste (15 Tage)** **[%]** |
| 500 | 0 | 0 |
| 100 | 0 | 0 |
| 50 | 0 | 0 |
| 10 | 0 | 0 |

**Tabelle 32:**

| **Verträglichkeit von Mefenpyr in Getreide (Nachauflauf)** | | | |
|---|---|---|---|
| **Aufwandmenge** **in g/ha** | **Schädigung** **Weizen (3 Tage)** **[%]** | **Schädigung** **Weizen (7 Tage)** **[%]** | **Schädigung** **Weizen (21 Tage)** **[%]** |
| 200 | 0 | 0 | 0 |
| 100 | 0 | 0 | 0 |
| 50 | 0 | 0 | 0 |

**Tabelle 33:**

| **Verträglichkeit von Mefenpyr in Getreide (Nachauflauf)** | | | |
|---|---|---|---|
| **Aufwandmenge** **in g/ha** | **Schädigung** **Gerste (3 Tage)** **[%]** | **Schädigung** **Gerste (7 Tage)** **[%]** | **Schädigung** **Gerste (21 Tage)** **[%]** |
| 200 | 0 | 0 | 0 |
| 100 | 0 | 0 | 0 |
| 50 | 0 | 0 | 0 |

### Beispiel 7

### Fenchlorazole und KIH 2023 (Weizen/Nachauflauf)

Zur Untersuchung der Safener-Wirkung von Fenchlorazol wurde diese Verbindung zusammen mit KIH 2023 in Weizen geprüft.

Die Beurteilung des Safener-Effektes von Fenchlorazole erfolgte analog zu Beispiel 5 (siehe Tabellen 36 und 37).

Fenchlorazol zeigte in den Versuchen eine deutliche Safener-Wirkung.

**Tabelle 34:**

| **Fenchlorazole und KIH 2023 (Nachauflauf)** | | |
|---|---|---|
| **Wirkstoff** | **Aufwandmenge** **in g/ha** | **Schädigung** **Weizen [%]** |
| KIH 2023 | 250 | 45 |
| KIH 2023 | 125 | 20 |
| KIH 2023 | 60 | 10 |
| KIH 2023 + Fenchlorazole | 250 + 250 | 20 |
| KIH 2023 + Fenchlorazole | 125 + 125 | 10 |
| KIH 2023 + Fenchlorazole | 60 + 60 | 5 |
| KIH 2023 + Fenchlorazole | 250 + 30 | 15 |
| KIH 2023 + Fenchlorazole | 125 + 30 | 10 |
| KIH 2023 + Fenchlorazole | 60 + 30 | 5 |

**Tabelle 35:**

| **Verträglichkeit von Fenchlorazole in Getreide im Nachauflauf** | | |
|---|---|---|
| **Wirkstoff** | **Schädigung** **Weizen (14 Tage)** **[%]** | **Schädigung** **Gerste (14 Tage)** **[%]** |
| 100 | 0 | 0 |
| 10 | 0 | 0 |

## Patentansprüche

1. Herbizide Mittel, **gekennzeichnet durch** einen wirksamen Gehalt an einer Wirkstoffkombination umfassend
(a) zumindest ein Phenoxypyrimidin-Derivat der allgemeinen Formel (I) 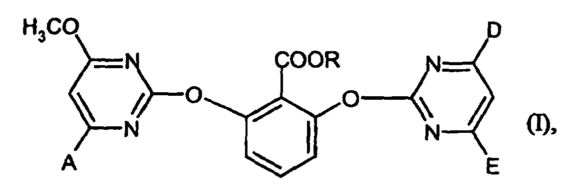 in welcher
R für Wasserstoff oder 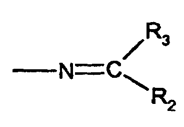 steht,
wobei
R₂ für Phenyl und
R₃ für Phenyl steht,
A für Methoxy und
D und E jeweils für Methoxy stehen,
und/oder ein Salz einer Verbindung der Formel (I)
(_{"}Wirkstoffe der Gruppe 1"),
und
(b) einer oder mehrerer Verbindungen aus einer zweiten Gruppe von Herbiziden, welche die nachstehend genannten Wirkstoffe enthält:
(5-Trifluormethyl-1,3,4-thiadiazol-2-yl-oxy)-essigsäure-N-isopropyl-N-(4-fluorphenyl)-amid, 2-(2-Methoxycarbonyl-phenylsulfonylaminocarbonyl)-4-methyl-5-n-propoxy-2,4-dihydro-3H-1,2,4-triazol-3-on oder ein Natriumsalz dieser Verbindung, Ethyl-2-[4-(6-chlorbenzoxazol-2-yl-oxy)-phenoxy]-propanoat, Methyl-2-[[[[(4,6-dimethoxy-2-pyrimidinyl)-amino]carbonyl]amino]sulfonyl]-6-(thifluoromethyl)-3-pyridincarboxylat(-Mononatriumsalz)
("Wirkstoffe der Gruppe 2"),
sowie gegebenenfalls
(c) zumindest eine die Kulturpflanzen-Verträglichkeit verbessernde Verbindung aus der folgenden Gruppe von Verbindungen:
α-(1,3-Dioxolan-2-yl-methoximino)-phenylacetonitril (Oxabetrinil), α-(Cyanomethoximino)-phenylacetonitril (Cyometrinil), 4-Chlor-N-(1,3-dioxolan-2-yl-methoxy)-α-trifluor-acetophenonoxim (Fluxofenim), 4,6-Dichlor-2-phenyl-pyrimidin (Fenclorim), 4-Dichloracetyl-3,4-dihydro-3-methyl-2H-1,4-benzoxazin (Benoxacor), 5-Chlor-chinoxalin-8-oxy-essigsäure-(1-methyl-hexylester) (Cloquintocet), 2,2-Dichlor-N-(2-oxo-2-(2-propenylamino)-ethyl)-N-(2-propenyl)-acetamid (DKA-24), 1,8-Naphthalsäureanhydrid, 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbonsäure-phenylmethylester (Flurazole), 3-Dichloracetyl-5-(2-furanyl)-2,2-dimethyl-oxazolidin (Furilazole, MON-13900), 4-Dichloracetyl-1-oxa-4-azaspiro[4.5]-decan (AD-67), 2-Dichlormethyl-2-methyl-1,3-dioxolan (MG-191), 2,2-Dichlor-N-(1,3-dioxolan-2-yl-methyl)-N-(2-propenyl)-acetamid (PPG-1292), 2,2-Dichlor-N,N-di-2-propenyl-acetamid (Dichlormid), N-(4-Methyl-phenyl)-N'-(1-methyl-1-phenyl-ethyl)-harnstoff (Dymron), 1-Dichloracetyl-hexahydro-3,3,8a-trimethylpyrrolo[1,2-a]-pyrimidin-6(2H)-on (BAS-145138), N-(2-Methoxy-benzoyl)-4-(methylaminocarbonylamino)-benzolsulfonamid, Ethyl-4,5-dihydro-5,5-diphenyl-3-isoxazolcarboxylat (Isoxadifen-ethyl), (4-Chlor-2-methylphenoxy)-essigsäure (MCPA), 2-(4-Chlor-2-methyl-phenoxy)-propionsäure (Mecoprop), Diethyl-1-(2,4-dichlorophenyl)-4,5-dihydro-5-methyl-1H-pyrazol-3,5-dicarboxylat (Mefenpyr-diethyl) und 2,4-Dichlorophenoxyessigsäure (2,4-D) und dessen Derivate ("Wirkstoffe der Gruppe 3").

2. Herbizide Mittel gemäß Anspruch 1, **dadurch gekennzeichnet, dass** sie als Wirkstoff der Gruppe 2 die folgende Verbindungen enthalten:
Ethyl-2-[4-(6-chlor-henzoxazol-2-yl-oxy)-phenoxy]-propanoat.

3. Herbizide Mittel gemäß Anspruch 1 oder 2, **dadurch gekennzeichnet, dass** sie als Wirkstoff der Gruppe 3 zumindest eine die Kulturpflanzen-Verträglichkeit verbessernde Verbindung aus der folgenden Gruppe von Verbindungen enthalten:
5-Chlor-chinoxalin-8-oxy-essigsäure-(1-methylhexylester) (Cloquintocet), 1-(2,4-Dichlor-phenyl)-5-trichlormethyl-1H-1,2,4-triazol-3-carbonsäure-ethylester (Fenchlorazol-ethyl), Ethyl-4,5-dihydro-5,5-diphenyl-3-isoxazolcarboxylat (Isoxadifen-ethyl), (4-Chlor-2-methylphenoxy)-essigsäure (MCPA), 2-(4-Chlor-2-methyl-phenoxy)-propionsäure (Mecoprop), Diethyl- 1 -(2,4-dichlorophenyl)-4,5-dihydro-5-methyl-1H-pyrazol-3,5-dicarboxylat (Mefenpyr-diethyl) und 2,4-Dichlorophenoxyessigsäure (2,4-D) und dessen Derivate.

4. Herbizide Mittel gemäß einem der Ansprüche 1 bis 3, **dadurch gekennzeichnet, dass** sie als Wirkstoff der Gruppe 1
2,6-Bis[(4,6-dimethoxy-2-pyrimidinyl)oxy]-benzoat (Natrium), (Bispyribac-sodium) oder Diphenyl-methanon O-[2,6-bis[(4,6-dimethoxy-2-pyrimidinyl)oxy]benzoyl]oxim (Pyribenzoxim) enthalten.

5. Herbizide Mittel gemäß einem der Ansprüche 1 bis 4, **dadurch gekennzeichnet, dass** sie als Wirkstoff der Gruppe 1
2,6-Bis[(4,6-dimethoxy-2-pyrimidinyl)oxy]-benzoat (Natrium), (Bispyribac-sodium) enthalten.

6. Verwendung eines Mittels gemäß einem der Ansprüche 1 bis 5 zur Bekämpfung von unerwünschten Pflanzen.

7. Verfahren zur Bekämpfung von unerwünschten Pflanzen, **dadurch gekennzeichnet, dass** man Mittel gemäß einem der Ansprüche 1 bis 5 auf die unerwünschten Pflanzen und/oder ihren Lebensraum einwirken lässt.

8. Verfahren zur Herstellung eines herbiziden Mittels, **dadurch gekennzeichnet, dass** man ein Mittel gemäß einem der Ansprüche 1 bis 5 mit oberflächenaktiven Mitteln und/oder Streckmitteln vermischt.

## Claims

1. Herbicidal compositions, **characterized in that** they comprise an effective amount of an active compound combination comprising
(a) at least one phenoxypyrimidine derivative of the general formula (I) 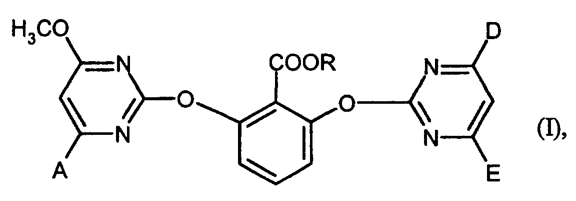 in which
R represents hydrogen or 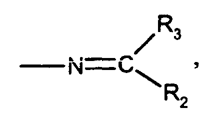
where
R₂ represents phenyl and
R₃ represents phenyl,
A represents methoxy and
D and E each represent methoxy,
and/or a salt of a compound of the formula (I)
("active compounds of group 1"),
and
(b) one or more compounds from a second group of herbicides comprising the active compounds mentioned below:
N-isopropyl-N-(4-fluorophenyl)-5-trifluoromethyl-1,3,4-thiadiazol-2-yloxy)-acetamide, 2-(2-methoxycarbonyl-phenylsulphonylaminocarbonyl)-4-methyl-5-n-propoxy-2,4-dihydro-3H-1,2,4-triazol-3-one or a sodium salt of this compound, ethyl 2-[4-(6-chlorobenzoxazol-2-yloxy)phenoxy]propanoate, methyl 2-[[[[(4,6-dimethoxy-2-pyrimidinyl)amino]carbonyl]amino]sulphonyl]-6-(trifluoromethyl)-3-pyridinecarboxylate (monosodium salt) ("active compounds of group 2"),
and optionally
(c) at least one compound which improves crop plant compatibility, from the following group of compounds:
α-(1,3-dioxolan-2-yl-methoximino)-phenylacetonitrile (oxabetrinil), α-(cyanomethoximino)-phenylacetonitrile (cyometrinil), 4-chloro-N-(1,3-dioxolan-2-yl-methoxy)-α-trifluoro-acetophenone oxime (fluxofenim), 4,6-dichloro-2-phenyl-pyrimidine (fenclorim), 4-dichloroacetyl-3,4-dihydro-3-methyl-2H-1,4-benzoxazine (benoxacor), 1-methyl-hexyl 5-chloro-quinoxalin-8-oxy-acetate (cloquintocet), 2,2-dichloro-N-(2-oxo-2-(2-propenylamino)-ethyl)-N-(2-propenyl)-acetamide (DKA-24), 1,8-naphthalic anhydride, ethyl 1-(2,4-dichloro-phenyl)-5-trichloromethyl-1H-1,2,4-triazole-3-carboxylate (fenchlorazol-ethyl), phenylmethyl 2-chloro-4-trifluoromethyl-thiazole-5-carboxylate (flurazole), 3-dichloroacetyl-5-(2-furanyl)-2,2-dimethyl-oxazolidine (furilazole, MON-13900), 4-dichloroacetyl-1-oxa-4-aza-spiro[4.5]-decane (AD-67), 2-dichloromethyl-2-methyl-1,3-dioxolane (MG-191), 2,2-dichloro-N-(1,3-dioxolan-2-yl-methyl)-N-(2-propenyl)-acetamide (PPG-1292), 2,2-dichloro-N,N-di-2-propenyl-acetamide (dichlormid), N-(4-methylphenyl)-N'-(1-methyl-1-phenyl-ethyl)-urea (dymron), 1-dichloroacetyl-hexahydro-3,3,8a-trimethylpyrrolo[ 1,2-a]-pyrimidin-6(2H)-one (BAS-145138), N-(2-methoxy-benzoyl)-4-(methylaminocarbonylamino)-benzenesulphonamide, ethyl 4,5-dihydro-5,5-diphenyl-3-isoxazolecarboxylate (isoxadifen-ethyl), diethyl 1-(2,4-dichlorophenyl)-4,5-dihydro-5-methyl-1H-pyrazole-3,5-dicarboxylate (mefenpyr-diethyl) and 2,4-dichlorophenoxyacetic acid (2,4-D) and its derivatives ("active compounds of group 3").

2. Herbicidal compositions according to Claim 1, **characterized in that** they comprise, as active compound of group 2, the following compound:
ethyl 2- [4-(6-chlorobenzoxazol-2-yloxy)phenoxy]propanoate.

3. Herbicidal compositions according to Claim 1 or 2, **characterized in that** they comprise, as active compound of group 3, at least one compound which improves crop plant compatibility, from the following group of compounds:
1-methylhexyl 5-chloro-quinoxalin-8-oxy-acetate (cloquintocet), ethyl 1-(2,4-dichloro-phenyl)-5-trichloromethyl-1H-1,2,4-triazole-3-carboxylate (fenchlorazol-ethyl), ethyl 4,5-dihydro-5,5-diphenyl-3-isoxazolecarboxylate (isoxadifen-ethyl), diethyl 1-(2,4-dichlorophenyl)-4,5-dihydro-5-methyl-1H-pyrazole-3,5-dicarboxylate (mefenpyr-diethyl) and 2,4-dichlorophenoxyacetic acid (2,4-D) and its derivatives.

4. Herbicidal compositions according to any of Claims 1 to 3, **characterized in that** they comprise, as active compound of group 1,
2,6-bis[(4,6-dimethoxy 2-pyrimidinyl)oxy]-benzoate (sodium) (bispyribac-sodium) or diphenyl-methanone O-[2,6-bis[(4,6-dimethoxy-2-pyrimidinyl)oxy]benzoyl] oxime (pyribenzoxim).

5. Herbicidal compositions according to any of Claims 1 to 4, **characterized in that** they comprise, as active compound of group 1,
2,6-bis[(4,6-dimethoxy-2-pyrimidinyl)oxy]-benzoate (sodium), (bispyribac-sodium).

6. Use of a composition according to any of Claims 1 to 5 for controlling undesirable plants.

7. Method for controlling undesirable plants, **characterized in that** compositions according to any of Claims 1 to 5 are allowed to act on the undesirable plants and/or their habitat.

8. Process for preparing a herbicidal composition, **characterized in that** a composition according to any of Claims 1 to 5 is mixed with surfactants and/or extenders.

## Revendications

1. Compositions herbicides, **caractérisées par** une teneur efficace en une combinaison de substances actives comprenant
(a) au moins un dérivé de phénoxypyrimidine de formule générale (I) 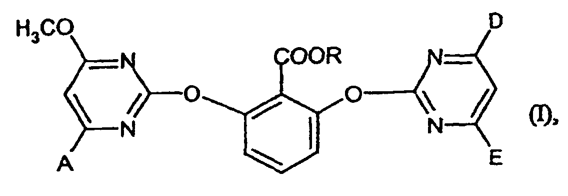 dans laquelle
R est l'hydrogène ou un reste 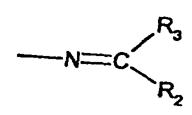
dans lequel
R₂ est un reste phényle et
R₃ est un reste phényle,
A est un reste méthoxy et
D et E représentent chacun un reste méthoxy,
et/ou un sel d'un composé de formule (I)
("substances actives du groupe 1")
et
(b) un ou plusieurs composés d'un deuxième groupe d'herbicides, qui comprend les substances actives mentionnées ci-après :
N-isopropyl-N-(4-fluorophényl)-amide d'acide (5-trifluorométhyl-1,3,4-thiadiazole-2-yl-oxy)-acétique, 2-(2-méthoxycarbonylphénylsulfonylaminocarbonyl)-4-méthyl-5-n-propoxy-2,4-dihydro-3H-1,2,4-triazole-3-one ou un sel de sodium de ce composé, 2-[4-(6-chlorobenzoxazole-2-yl-oxy)-phénoxy]-propanoate d'éthyle, sel monosodique du 2-[[[[(4,6-diméthoxy-2-pyrimidinyl)-amino]carbonyl]-amino] sulfonyl]-6-(trifluorométhyl)-3-pyridine-carboxylate de méthyle
("substances actives du groupe 2"),
ainsi que, le cas échéant,
(c) au moins un composé améliorant la compatibilité avec les plantes cultivées, du groupe de composés suivants :
α-(1,3-dioxolanne-2-yl-méthoximino)-phénylacétonitrile (oxabétrinil), α-(cyanométhoximino)-phénylacétonitrile (cyométrinil), oxime de 4-chloro-N-(1,3-dioxolanne-2-yl-méthoxy)-α-trifluoracétophénonoxime (fluxofénim), 4,6-dichloro-2-phénylpyrimidine (fenclorim), 4-dichloracétyl-3,4-dihydro-3-méthyl-2H-1,4-benzoxazine (bénoxacor), ester 1-méthylhexylique d'acide 5-chloroquinoxaline-8-oxyacétique (cloquintocet), 2,2-dichloro-N- (2-oxo-2- (2-propénylamino) -éthyl) -N- (2-propényl)-acétamide (DKA-24), anhydride d'acide 1,8-naphtalique, ester éthylique d'acide 1-(2,4-dichorophényl)-5-trichlorométhyl-1H-1,2,4-triazole-3-carboxylique (fenchlorazole-éthyl), ester phénylméthylique d'acide 2-chloro-4-trifluorométhylthiazole-5-carboxylique (flurazole), 3-dichloracétyl-5-(2-furannyl)-2,2-diméthyloxazolidine (furilazole, MON-13900), 4-dichloracétyl-1-oxa-4-azaspiro[4.5]-décane (AD-67), 2-dichlorométhyl-2-méthyl-1,3-dioxolanne (MG-191), 2,2-dichloro-N-(1,3-dioxolanne-2-yl-méthyl)-N-(2-propényl) acétamide (PPG-1292), 2, 2-dichloro-N, N-di-2-propénylacétamide (dichlormide), N-(4-méthylphényl)-N'-(1-méthyl-1-phényléthyl)-urée (Dymron), 1-dichloracétylhexahydro-3,3,8a-triméthylpyrrolo[1,2-a]-pyrimidine-6(2H)-one (BAS-145138), N-(2-méthoxybenzoyl)-4-(méthylaminocarbonylamino)-benzènesulfonamide, 4,5-dihydro-5,5-diphényl-3-isoxazole-carboxylate d'éthyle (isoxadifène-éthyl), acide (4-chloro-2-méthylphénoxy)-acétique (MCPA), acide 2-(4-chloro-2-méthylphénoxy)-propionique (mécoprop), 1-(2,4-dichlorophényl)-4,5-dihydro-5-méthyl-1H-pyrazole-3,5-dicarboxylate de diéthyle (méfènepyr-diéthyl) et acide 2,4-dichlorophénoxyacétique (2,4-D) et ses dérivés ("substances actives du groupe 3").

2. Compositions herbicides suivant la revendication 1, **caractérisées en ce qu'**elles contiennent comme substance active du groupe 2 le composé suivant :
2-[4-(6-chlorobenzoxazole-2-yloxy)-phénoxy]-propanoate d'éthyle.

3. Compositions herbicides suivant la revendication 1 ou 2, **caractérisées en ce qu'**elles contiennent comme substance active du groupe 3 au moins un composé améliorant la compatibilité avec les plantes cultivées, choisi dans le groupe de composés suivants :
ester 1-méthylhexylique d'acide 5-chloro-quinoxaline-8-oxyacétique (cloquintocet), ester éthylique d'acide 1-(2,4-dichlorophényl)-5-trichlorométhyl-1H-1,2,4-triazole-3-carboxylique (fenchlorazole-éthyl), 4,5-dihydro-5,5-diphényl-3-isoxazole-carboxylate d'éthyle (isoxadifène-éthyl), acide (4-chloro-2-méthylphénoxy)-acétique (MCPA), acide 2-(4-chloro-2-méthylphénoxy)-propionique (mécoprop), 1-(2,4-dichlorophényl)-4,5-dihydro-5-mëthyl-1H-pyrazole-3,5-dicarboxylate de diéthyle (méfenpyr-diéthyl) et acide 2,4-dichlorophénoxyacétique (2,4-D) et ses dérivés.

4. Compositions herbicides suivant l'une des revendications 1 à 3, **caractérisées en ce qu'**elles contiennent comme substance active du groupe 1
le 2,6-bis[(4,6-diméthoxy-2-pyrimidinyl)oxy)]-benzoate (sodium), (bispyribac-sodium) ou la O-[2,6-bis[(4,6-diméthoxy-2-pyridimidinyl) oxy] benzoyl] oxime de diphénylméthanone (pyribenzoxime).

5. Compositions herbicides suivant l'une des revendications 1 à 4, **caractérisées en ce qu'**elles contiennent comme substance active du groupe 1
le 2,6-bis[(4,6-diméthoxy-2-pyrimidinyl)oxy]-benzoate (sodium), (bispyribac-sodium).

6. Utilisation d'une composition suivant l'une des revendications 1 à 5 pour la lutte contre des plantes indésirables.

7. Procédé de lutte contre des plantes indésirables, **caractérisé en ce qu'**on fait agir des compositions suivant l'une des revendications 1 à 5 sur les plantes indésirables et/ou sur leur milieu.

8. Procédé de préparation d'une composition herbicide, **caractérisé en ce qu'**on mélange une composition suivant l'une des revendications 1 à 5 avec des agents tensioactifs et/ou des diluants.
